# EUROPÄISCHE PATENTSCHRIFT

(11) **EP 1 772 727 B1**
(45) Veröffentlichungstag und Bekanntmachung des Hinweises auf die Patenterteilung: **07.07.2010**
(21) Anmeldenummer: 06019671.4
(22) Anmeldetag: 20.09.2006
(51) Int. Cl.: G01N 21/89, F21S 4/00

(54) **Vorrichtung zur Emission von linienartigem Licht**
Apparatus with a linear light source
Dispositif avec une source de lumière linéaire

(30) Priorität: 06.10.2005 DE 102005047913
(43) Veröffentlichungstag der Anmeldung: 11.04.2007
(73) Patentinhaber: Texmag GmbH Vertriebsgesellschaft, 8800 Thalwil (CH)
(72) Erfinder: Palatzky, Roland, 86356 Neusäß (DE); Spatz, Michael, 86156 Augsburg (DE)
(74) Vertreter: Peterreins, Frank

(56) Entgegenhaltungen:
- EP-A- 1 577 613
- EP-A1- 1 205 745
- DE-A1- 3 709 500
- DE-A1- 4 031 633
- DE-B3-102004 014 532

## Beschreibung

Die vorliegende Erfindung betrifft eine Vorrichtung zur Emission von Licht, welche linienartig angeordnete Einrichtungen zur Abstrahlung von Licht aufweist. Die vorliegende Erfindung betrifft außerdem eine Messanordnung mit einer derartigen Vorrichtung zur Emission von Licht und einer oder mehreren Kameras sowie ein System zur Detektierung von Fehlern und/oder Unregelmäßigkeiten auf einer Materialbahn, die entlang einer Messebene vorbeigeführt wird.

Im Stand der Technik sind Systeme zur Detektierung von Fehlern und/oder Unregelmäßigkeiten auf einer Materialbahn, die entlang einer Messebene vorbeigeführt wird, bekannt, die eine Vorrichtung zur Emission von linienartigem Licht aufweisen. Mit linienartigem Licht wird dabei gebündeltes Licht verstanden, das auf der Materialbahn eine bestrahlte Linie erzeugt, die meist quer zur Materialbahn verläuft. Mit einem derartigen System kann beispielsweise eine Papierbahn, die mit hoher Geschwindigkeit entlang der Messebene vorbeigeführt wird, untersucht werden, wobei vorzugsweise eine oder mehrere Zeilenkameras verwendet werden, um durch die Detektierung von Helligkeitsunterschieden auf der Materialbahn im Auflicht- oder Durchlichtverfahren Fehler und/oder. Unregelmäßigkeiten (z.B. Dünnstellen, Einschlüsse von Fliegen oder Schmutzpartikeln, etc.) festzustellen. Im Auflichtverfahren sind dabei sowohl die Emissionsvorrichtung als auch die Kamera auf derselben Seite von der Materialbahn angeordnet, und im Durchlichtverfahren auf unterschiedlichen Seiten von der Materialbahn.

Vorrichtungen zur Emission von linienartigem Licht sind beispielsweise aus der WO 2004/006560 und aus der US 6,880,952 B2 bekannt.

Die DE 10 2004 014532 B3 offenbart eine Vorrichtung gemäß dem Oberbegriff von Anspruch 1 und betrifft ein optisches System zur Erzeugung eines beleuchteten Gebildes auf einer Oberfläche eines relativ zum Gebilde bewegten Materials, wobei eine Beleuchtungseinrichtung mit mehreren von einer Steuereinrichtung gepulst betriebenen Lichtquellen Licht zur Erzeugung des Gebildes emittiert.

Die Aufgabe der vorliegenden Erfindung ist es, eine Vorrichtung zur Emission von linienartigem Licht bzw. eine Messanordnung zu schaffen, die auf einfachere Weise zu warten ist.

Die Aufgabe wird durch eine Vorrichtung gemäß Anspruch 1, durch eine Messanordnung gemäß Anspruch 22 bzw. durch ein System gemäß Anspruch 23 gelöst. Die abhängigen Ansprüche enthalten vorteilhafte Ausgestaltungen der Erfindung.

Nach einem weiteren Aspekt der Erfindung soll die Vorrichtung bzw. die Messanordung langlebiger werden. Nach noch einem weiteren Aspekt der Erfindung soll die Vorrichtung bzw. die Messanordnung eine effizientere Lichtausbeute aufweisen bzw. einen effizienter gebündelten Lichtstrahl erzeugen, so dass auf der Materialbahn eine höhere Lichtintensität entlang der beabsichtigen Linie vorhanden ist. Damit soll auch erreicht werden, dass die Geschwindigkeit der geprüften Materialbahn weiter erhöht werden kann, da die Lichtempfindlichkeit der Kamera begrenzt, so dass höhere Geschwindigkeiten auch höhere Lichtintensitäten erfordern.

Nach der vorliegenden Erfindung weist die Vorrichtung zur Emission von Licht eine Vielzahl von Modulelementen auf, welche linienartig angeordnete Einrichtungen zur Abstrahlung von Licht tragen. Eine Einrichtung zur Abstrahlung von Licht kann dabei eine Reihe aus LED's umfassen. Es ist aber auch möglich, die Modulelemente mit einer Vielzahl von Lichtleitern zu versehen, die jeweils mit einem Ende mit einer Lichtquelle verbunden sind, und die jeweils mit dem anderen Ende linienartig entlang eines Modulelementes angeordnet sind.

Die Modulelemente tragen jeweils eine Einrichtung zur Abstrahlung von Licht und können jeweils gesondert in die Vorrichtung zur Emission von Licht eingesetzt und ausgetauscht werden. Die Modulelemente werden dabei an einer Traverse befestigt. Durch den modulartigen Aufbau ist es auf einfache Weise möglich, Defekte zu beheben, z.B. wenn eine LED oder die Platine(n) auf dem Modul zur Ansteuerung von LED's nicht mehr funktionsfähig sind. Gerade bei einer sehr hohen Anzahl von LED's zur Erhöhung der Abstrahlungsleistung steigt auch das Ausfallrisiko der gesamten Vorrichtung durch Ausfall einer einzelnen LED. In diesem Fall kann ein Wartungstechniker ein Modul demontieren, wobei die sonstige Messanordnung sowie die sonstigen Module und Einrichtungen zur Abstrahlung von Licht weitestgehend im montierten Zustand verbleiben können. Vorzugsweise ist vorgesehen, dass jedes Modul von Außen frei zugänglich ist.

Dabei ist zu berücksichtigen, dass bei Verwendung von LED's die Bauform ohnehin komplexer ist, da die Platine(n) einschließlich Ansteuerung, Temperaturregelung und Bus-Kommunikation ebenfalls an der Einrichtung zur Abstrahlung von Licht vorgesehen ist. Durch den modularen Aufbau wird der Nachteil der komplexeren Bauform also ausgeglichen.

Die Modulelemente weisen vorzugsweise eine Form auf, die zur exakten Ausrichtung des Modulelements innerhalb der Vorrichtung geeignet ist. Insbesondere können Anschlagkanten oder Führungen zur exakten Ausrichtung der Modulelemente innerhalb der Vorrichtung vorgesehen sein, die beispielsweise mit der Traverse und/oder mit Anschlagkanten bzw. Führungen der jeweils benachbarten Modulelementen zusammenwirken. Auf diese Weise wird erreicht, dass das linienartige Licht auch nach dem Austausch eines Moduls auf einfache Weise mit exakter Ausrichtung erzeugt werden kann, und dass ein nahtloser und knickfreier optischer Übergang von einer Platine zur nächsten Platine gewährleistet ist.

Damit die Lichtleistung weiter erhöht werden kann, ohne dass die Einrichtung zur Abstrahlung von Licht Schaden nimmt, ist eine Kühleinrichtung vorgesehen. Die Modulelemente können beispielsweise Kühlrippen aufweisen, so dass durch die umgebende Luft Wärme abgeführt werden kann.

Nach einem weiteren Aspekt der Erfindung ist an der Traverse zum Tragen der Modulelemente eine Vorrichtung zur Wasserkühlung anschließbar, so dass durch die Traverse Wasser geführt werden kann zur Kühlung der Modulelemente. Die Modulelemente können dabei derart an der Traverse anliegen, dass die Abwärme durch Wärmeleitung auf die Traverse übertragen und so durch die Wasserkühlung abgeführt wird. Auf diese Weise kann die Lebensdauer der LED's und/oder der Platinen durch eine verbesserte Kühlung weiter erhöht werden.

Zusätzlich oder alternativ kann ein Gebläse zur Luftkühlung der Modulelemente vorgesehen sein. Eine Luftführungseinheit kann dabei aus dem Gebläse austretende Luft an den Modulelementen vorbeiführen, insbesondere vorbei an Kühlrippen, die an den Modulelementen vorgesehen sind.

Die Vorrichtung weist weiter vorzugsweise ein Linsensystem - beispielsweise eine oder mehrere Stablinsen - zur Bündelung des Lichts auf, das von den Einrichtungen zur Abstrahlung von Licht austritt, um auf der Messebene einen gebündelten, linienartigen Lichtstrahl zu erhalten.

Nach einem weiteren Aspekt der Erfindung ist beabstandet von dem Linsensystem ein Diffusor vorgesehen ist, der zwischen dem Linsensystem und der Einrichtung zur Abstrahlung von Licht angeordnet ist. Die Lichtausbeute auf der Messebene kann weiter erhöht werden, indem das Verhältnis des Abstandes zwischen der Einrichtung zur Abstrahlung von Licht und dem Diffusor gegenüber dem Abstand zwischen dem Diffusor und dem Mittelpunkt des Linsensystems im Bereich von 1:1 bis 1:4 liegt, insbesondere 1:2 bis 1:3, insbesondere etwa 3:7.

Außerdem ist es vorteilhaft, wenn das Verhältnis des Abstandes zwischen der Einrichtung zur Abstrahlung von Licht und dem Mittelpunkt des Linsensystems gegenüber dem Abstand zwischen dem Mittelpunkt des Linsensystems und der Messebene im Bereich von 5:3 bis 5:8 liegt, insbesondere etwa 1:1.

Zur besseren Ausrichtung des Lichtstrahles kann eine Blende zwischen der Einrichtung zur Abstrahlung von Licht und dem Linsensystem vorgesehen sein, die vorzugsweise benachbart zur Einrichtung zur Abstrahlung von Licht und beabstandet zum Linsensystem angeordnet ist. Nach einem weiteren Aspekt der Erfindung kann die Blende dabei Spiegelbleche aufweisen, die sich etwa in Strahlungsrichtung erstrecken, und insbesondere parallel zueinander angeordnet sind. Durch die parallele Ausrichtung der Spiegelbleche wird eine Blendenfunktion bei erhöhter Lichtausbeute gegenüber herkömmlichen Blenden erreicht. Besonders vorteilhaft ist es dabei, wenn der Diffusor innerhalb der Blende angeordnet ist, und insbesondere zwischen den Spiegelblechen eingefasst ist.

Die vorliegende Erfindung wird nachfolgend anhand bevorzugter Ausführungsformen unter Bezug auf die beigefügten Zeichnungen erläutert.
- **Fig. 1**: zeigt einen Querschnitt durch eine Vorrichtung zur Abstrahlung von Licht nach einer Ausführungsform der vorliegenden Erfindung;
- **Fig. 2**: zeigt ein Modul nach einer weiteren Ausführungsform der vorliegenden Erfindung; und
- **Fig. 3**: zeigt einen weiteren Querschnitt durch eine Vorrichtung zur Abstrahlung von Licht nach einer weiteren Ausführungsform der vorliegenden Erfindung.

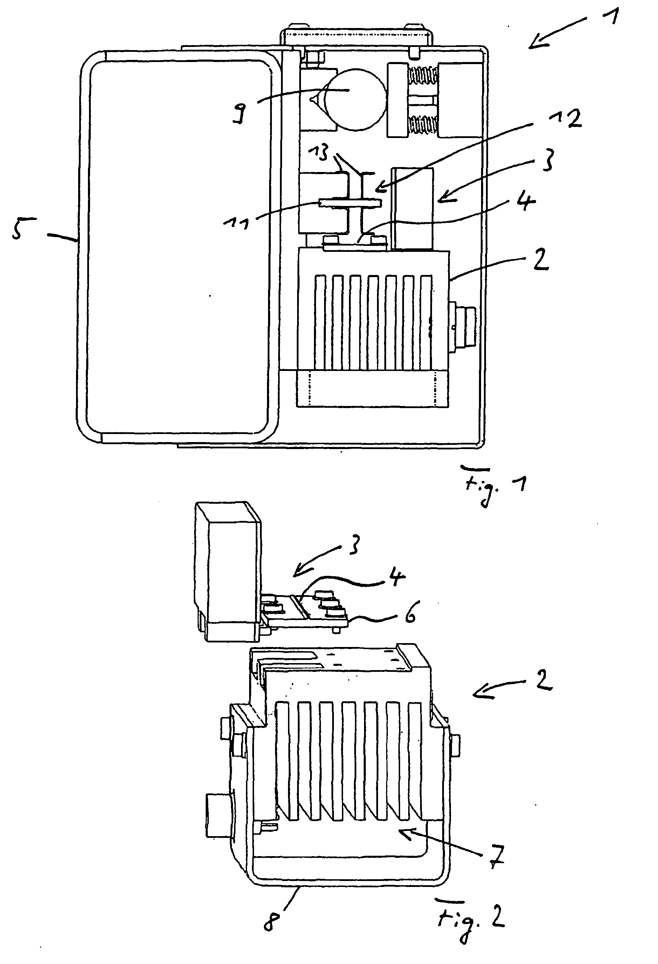

**Fig. 1** zeigt einen Querschnitt durch eine Vorrichtung **1** zur Abstrahlung von Licht nach einer Ausführungsform der vorliegenden Erfindung. Die Vorrichtung weist eine Vielzahl von Modulelementen **2** auf, welche linienartig angeordnete Einrichtungen **3** zur Abstrahlung von Licht tragen. Eine Vorrichtung kann über eine Länge von 1 m beispielsweise 25 Modulelemente aufweisen.

Die in **Fig. 1** und **Fig. 2** dargestellte Einrichtung **3** zur Abstrahlung von Licht umfasst eine Reihe aus LEDs **4**. Es ist aber auch möglich, die Modulelemente mit einer Vielzahl von Lichtleitern zu versehen, die jeweils mit einem Ende mit einer Lichtquelle verbunden sind, und die jeweils mit dem anderen Ende linienartig entlang eines Modulelementes angeordnet sind.

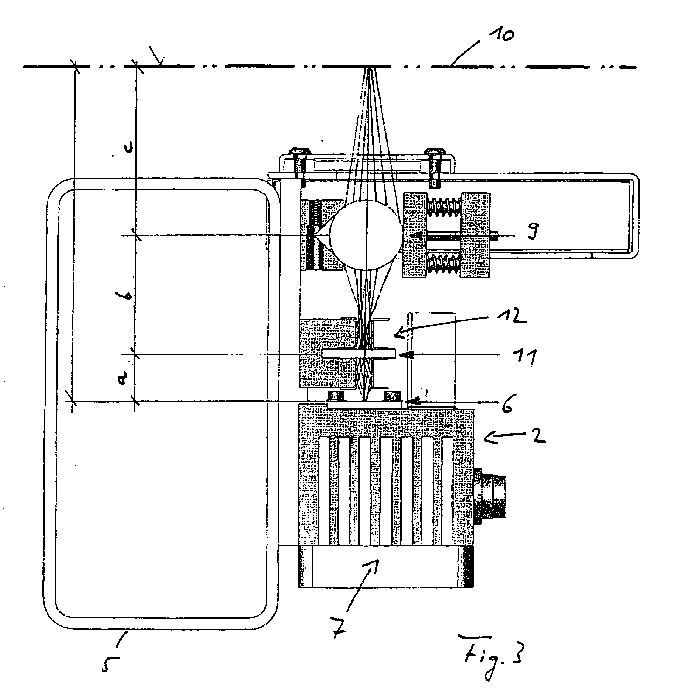

Die Modulelemente **2** tragen jeweils eine Einrichtung **3** zur Abstrahlung von Licht und können jeweils gesondert in die Vorrichtung **1** zur Emission von Licht eingesetzt und ausgetauscht werden. Die Modulelemente **2** werden dabei an einer Traverse **5** befestigt. Durch den modulartigen Aufbau ist es auf einfache Weise möglich, Defekte zu beheben, z.B. wenn eine LED oder die Platine **6** auf dem Modul **2** zur Ansteuerung von LEDs nicht mehr funktionsfähig sind. In diesem Fall kann ein Wartungstechniker ein Modul demontieren, wobei die sonstige Messanordnung sowie die sonstigen Module und Einrichtungen zur Abstrahlung von Licht weitestgehend im montierten Zustand verbleiben können. Vorzugsweise ist vorgesehen, dass jedes Modul von Außen frei zugänglich ist, wie dies z.B. bei der Ausführungsform nach **Fig. 3** der Fall ist.

Die Modulelemente **2** weisen vorzugsweise eine Form auf, die zur exakten Ausrichtung des Modulelements innerhalb der Vorrichtung **1** geeignet ist. Insbesondere können Anschlagkanten oder Führungen zur exakten Ausrichtung der Modulelemente **2** innerhalb der Vorrichtung vorgesehen sein, die beispielsweise mit der Traverse **5** und/oder mit Anschlagkanten bzw. Führungen der jeweils benachbarten Modulelementen zusammenwirken. Auf diese Weise wird erreicht, dass das linienartige Licht auch nach dem Austausch eines Moduls auf einfache Weise mit exakter Ausrichtung erzeugt werden kann, und dass ein nahtloser und knickfreier optischer Übergang von einer Platine **6** zur nächsten Platine gewährleistet ist.

Damit die Lichtleistung weiter erhöht werden kann, ohne dass die Einrichtung zur Abstrahlung von Licht Schaden nimmt, ist eine Kühleinrichtung vorgesehen. Die Modulelemente können beispielsweise Kühlrippen **7** aufweisen, so dass durch die umgebende Luft Wärme abgeführt werden kann.

Nach einem weiteren Aspekt der Erfindung ist an der Traverse **5** zum Tragen der Modulelemente **2** eine Vorrichtung zur Wasserkühlung anschließbar, so dass durch die Traverse **5** Wasser geführt werden kann zur Kühlung der Modulelemente **2.** Die Modulelemente **2** können dabei derart an der Traverse **5** anliegen, dass die Abwärme durch Wärmeleitung auf die Traverse **5** übertragen und so durch die Wasserkühlung abgeführt wird. Auf diese Weise kann die Lebensdauer der LEDs **4** und/oder der Platinen 6 durch eine verbesserte Kühlung weiter erhöht werden.

Zusätzlich oder alternativ kann ein Gebläse (nicht dargestellt) zur Luftkühlung der Modulelemente vorgesehen sein. Eine Luftführungseinheit kann dabei aus dem Gebläse austretende Luft an den Modulelementen **2** vorbeiführen, insbesondere vorbei an Kühlrippen **7,** die an den Modulelementen vorgesehen sind. Als Luftführungseinheit kann dabei ein Blech **8** dienen, welches die Kühlrippen **7** umgibt.

Die Vorrichtung nach **Fig. 1** weist weiter ein Linsensystem **9** zur Bündelung des Lichts auf, das in diesem Ausführungsbeispiel aus einer Stablinse gebildet wird, und das von den Einrichtungen **3** zur Abstrahlung von Licht austritt, um auf der Messebene **10** einen gebündelten, linienartigen Lichtstrahl zu erhalten.

Nach einem weiteren Aspekt der Erfindung ist beabstandet von dem Linsensystem **9** ein Diffusor **11** vorgesehen ist, der zwischen dem Linsensystem **9** und der Einrichtung **3** zur Abstrahlung von Licht angeordnet ist. Die Lichtausbeute auf der Messebene **10** kann - wie in **Fig. 3** dargestellt ist - weiter erhöht werden, indem das Verhältnis des Abstandes a zwischen den LEDs **4** der Einrichtung **3** zur Abstrahlung von Licht und dem Diffusor **11** gegenüber dem Abstand **b** zwischen dem Diffusor **11** und dem Mittelpunkt des Linsensystems **9** im Bereich von 1:1 bis 1:4 liegt, insbesondere 1:2 bis 1:3, insbesondere etwa 3:7.

Außerdem ist es vorteilhaft, wenn das Verhältnis des Abstandes **a+b** zwischen den LEDs **4** der Einrichtung **3** zur Abstrahlung von Licht und dem Mittelpunkt des Linsensystems **9** gegenüber dem Abstand c zwischen dem Mittelpunkt des Linsensystems **9** und der Messebene **10** im Bereich von 5:3 bis 5:8 liegt, insbesondere etwa 1:1.

Zur besseren Ausrichtung des Lichtstrahles kann eine Blende **12** zwischen der Einrichtung **3** zur Abstrahlung von Licht und dem Linsensystem **9** vorgesehen sein, die vorzugsweise benachbart zur Einrichtung **3** zur Abstrahlung von Licht und beabstandet zum Linsensystem **9** angeordnet ist. Nach einem weiteren Aspekt der Erfindung kann die Blende **12** dabei Spiegelbleche **13** aufweisen, die sich etwa in Strahlungsrichtung erstrecken, und insbesondere parallel zueinander angeordnet sind. Durch die parallele Ausrichtung der Spiegelbleche **13** wird eine Blendenfunktion bei erhöhter Lichtausbeute gegenüber herkömmlichen Blenden erreicht. Besonders vorteilhaft ist es dabei, wenn der Diffusor **11** innerhalb der Blende **12** angeordnet ist, und insbesondere zwischen den Spiegelblechen **13** eingefasst ist.

## Patentansprüche

1. Vorrichtung zur Emission von Licht, umfassend:
eine Traverse (5), und
linienartig angeordnete Einrichtungen (3) zur Abstrahlung von Licht, wobei eine Einrichtung (3) jeweils ein oder mehrere elekro-optische Elemente bzw. LED's (4) und ein oder mehrere Platinen (6) zur Ansteuerung der elektro-optischen Elemente bzw. LED's (4) aufweist,
**dadurch gekennzeichnet,**
**dass** Modulelemente (2) vorgesehen sind, welche jeweils eine abnehmbare Einrichtung (3) zur Abstrahlung von Licht tragen und an der Traverse (5) befestigt sind, wobei jedes Modulelement (2) eine Kühleinrichtung aufweist, und wobei die Modulelemente (2) jeweils gesondert in die Vorrichtung zur Emission von Licht eingesetzt und ausgetauscht werden können, so dass ermöglicht wird, Defekte zu beheben, wenn ein elekrooptisches Element bzw. LED oder die Platine (6) einer Einrichtung (3) zur Abstrahlung von Licht nicht mehr funktionsfähig ist.

2. Vorrichtung gemäss Anspruch 1, **dadurch gekennzeichnet, dass** jedes Modulelement (2) eine Form aufweist, die zur exakten Ausrichtung des Modulelements (2) innerhalb der Vorrichtung geeignet ist.

3. Vorrichtung gemäss Anspruch 1 oder 2, **dadurch gekennzeichnet, dass** die Modulelemente (2) Anschlagkanten oder Führungen aufweisen zur exakten Ausrichtung der Modulelemente (2) innerhalb der Vorrichtung.

4. Vorrichtung gemäss Anspruch 3, **dadurch gekennzeichnet, dass** die Anschlagkanten bzw. Führungen der Modulelemente (2) mit einer Traverse (5) und/oder mit Anschlagkanten bzw. Führungen der jeweils benachbarten Modulelementen (2) zusammenwirken.

5. Vorrichtung gemäss einem der vorhergehenden Ansprüche, **dadurch gekennzeichnet, dass** jedes Modulelement (2) Kühlrippen (7) aufweist.

6. Vorrichtung insbesondere gemäss einem der vorhergehenden Ansprüche, **dadurch gekennzeichnet, dass** an der Traverse (5) zum Tragen der Modulelemente (2) eine Vorrichtung zur Wasserkühlung anschliessbar ist, so dass durch die Traverse Wasser geführt werden kann zur Kühlung der Modulelemente (2).

7. Vorrichtung gemäss einem der vorhergehenden Ansprüche, **dadurch gekennzeichnet, dass** die Modulelemente (2) derart an der Traverse (5) anliegen, so dass die Abwärme durch Wärmeleitung auf die Traverse (5) übertragen und so durch die Wasserkühlung abgeführt wird.

8. Vorrichtung insbesondere gemäss einem der vorhergehenden Ansprüche, **dadurch gekennzeichnet, dass** ein Gebläse zur Luftkühlung der Modulelemente (2) vorgesehen ist.

9. Vorrichtung gemäss Anspruch 8, **dadurch gekennzeichnet, dass** eine Luftführungseinheit (8) vorgesehen ist, um die aus dem Gebläse austretende Luft an den Modulelementen (2) vorbeizuführen.

10. Vorrichtung gemäss Anspruch 9, **dadurch gekennzeichnet, dass** die Luftführungseinheit (8) die aus dem Gebläse austretende Luft an Kühlrippen (7) vorbeiführt, die an den Modulelementen (2) vorgesehen sind.

11. Vorrichtung gemäss einem der vorhergehenden Ansprüche, **dadurch gekennzeichnet, dass** ein Linsensystem (9) vorgesehen ist zur Bündelung des Lichts, das von den Einrichtungen (3) zur Abstrahlung von Licht austritt, auf eine Messebene (10), um auf der Messebene (10) einen gebündelten, linienartigen Lichtstrahl zu erhalten.

12. Vorrichtung gemäss Anspruch 11, **dadurch gekennzeichnet, dass** das Linsensystem (9) eine oder mehrere Stablinsen aufweist.

13. Vorrichtung gemäss Anspruch 11 oder 12, **dadurch gekennzeichnet, dass** beabstandet von dem Linsensystem (9) ein Diffusor (11) vorgesehen ist, der zwischen dem Linsensystem (9) und der Einrichtung (3) zur Abstrahlung von Licht angeordnet ist.

14. Vorrichtung gemäss Anspruch 13, **dadurch gekennzeichnet, dass** das Verhältnis des Abstandes (a) zwischen der Einrichtung zur Abstrahlung von Licht und dem Diffusor gegenüber dem Abstand (b) zwischen dem Diffusor und dem Mittelpunkt des Linsensystems im Bereich von 1:1 bis 1:4 liegt, insbesondere 1:2 bis 1:3, insbesondere etwa 3:7.

15. Vorrichtung gemäss einem Ansprüche 13 bis 14, **dadurch gekennzeichnet, dass** das Verhältnis des Abstandes (a+b) zwischen der Einrichtung zur Abstrahlung von Licht und dem Mittelpunkt des Linsensystems gegenüber dem Abstand (c) zwischen dem Mittelpunkt des Linsensystems und der Messebene im Bereich von 5:3 bis 5:8 liegt, insbesondere etwa 1:1.

16. Vorrichtung gemäss einem der vorhergehenden Ansprüche, **dadurch gekennzeichnet, dass** eine Blende (12) zwischen der Einrichtung (3) zur Abstrahlung von Licht und dem Linsensystem (9) vorgesehen ist.

17. Vorrichtung gemäss Anspruch 16, **dadurch gekennzeichnet, dass** die Blende (12) benachbart zur Einrichtung (3) zur Abstrahlung von Licht und beabstandet zum Linsensystem (9) angeordnet ist.

18. Vorrichtung insbesondere gemäss Anspruch 16 oder 17, **dadurch gekennzeichnet, dass** die Blende (12) Spiegelbleche (13) aufweist, die sich etwa in Strahlungsrichtung erstrecken.

19. Vorrichtung gemäss Anspruch 18, **dadurch gekennzeichnet, dass** die Spiegelbleche (13) der Blende parallel zueinander angeordnet sind.

20. Vorrichtung gemäss einem Ansprüche 17 bis 19, **dadurch gekennzeichnet, dass** der Diffusor (11) innerhalb der Blende (12) angeordnet ist.

21. Vorrichtung gemäss einem Ansprüche 17 bis 20, **dadurch gekennzeichnet, dass** der Diffusor (11) zwischen den Spiegelblechen (13) eingefasst ist.

22. Messanordnung mit einer Vorrichtung zur Emission von Licht gemäß einem der vorhergehenden Ansprüche und einer oder mehreren Kameras, insbesondere Zeilenkameras, wobei sowohl die Emissionsvorrichtung als auch die Kamera bzw. die Kameras auf eine Messebene ausgerichtet sind.

23. System zur Detektierung von Fehlern und/oder Unregelmässigkeiten auf einer Materialbahn, die entlang einer Messebene vorbeigeführt wird, **dadurch gekennzeichnet, dass** das System eine Messanordnung gemäss Anspruch 22 umfasst und eine Auswerteeinheit zur Analyse der Daten von der Kamera bzw. von den Kameras, um Fehler und/oder Unregelmässigkeiten festzustellen.

## Claims

1. An apparatus for emitting light, comprising:
a tie bar (5), and
linearly arranged devices (3) for radiating light, wherein each device (3) has one or more electro-optical elements or LEDs (4) and one or more printed circuit boards (6) for driving said electro-optical elements or LEDs (4),
**characterized in**
**that** modular elements (2) are provided that carry each a removable device (3) for radiating light and are fastened to the tie bar (5), wherein each modular element (2) has a cooling system, and wherein the modular elements (2) can each be installed and replaced separately in the apparatus for emitting light, so that it is possible to correct defects, if an electro-optical element or LED or the printed circuit board (6) of a device (3) for radiating light is no longer operative.

2. The apparatus as in claim 1, **characterized in that** each modular element (2) has a shape suitable for exactly orienting the modular element (2) within the apparatus.

3. The apparatus as in claim 1 or 2, **characterized in that** said modular elements (2) comprise stop edges or guides for exactly orienting the modular elements (2) within the apparatus.

4. The apparatus as in claim 3, **characterized in that** said stop edges or guides of said modular elements (2) cooperate with a tie bar (5) and/or with stop edges or guides of the respective adjacent modular elements (2).

5. The apparatus as in one of the preceding claims, **characterized in that** each modular element (2) has cooling fins (7).

6. The apparatus particularly as in one of the preceding claims, **characterized in that** an apparatus for water cooling can be connected to said tie bar (5) for carrying said modular elements (2), so that water can be passed through said tie bar to cool said modular elements (2).

7. The apparatus as in one of the preceding claims, **characterized in that** said modular elements (2) abut said tie bar (5) in such fashion that the waste heat is transferred to said tie bar (5) by thermal conduction and thus is dissipated through the water cooling system.

8. The apparatus particularly as in one of the preceding claims, **characterized in that** a fan for air-cooling said modular elements (2) is provided.

9. The apparatus as in claim 8, **characterized in that** an air conduction unit (8) is provided to convey the air coming from said fan past said modular elements (2).

10. The apparatus as in claim 9, **characterized in that** said air conduction unit (8) conveys the air coming from said fan past cooling fins (7) provided on said modular elements (2).

11. The apparatus as in one of the preceding claims, **characterized in that** a lens system (9) is provided to bundle the light emanating from said devices (3) for radiating light onto a measurement plane (10) in order to obtain a bundled, linear light beam on said measurement plane (10).

12. The apparatus as in claim 11, **characterized in that** said lens system (9) comprises one or more rod lenses.

13. The apparatus as in claim 11 or 12, **characterized in that** provided at a distance from said lens system (9) is a diffuser (11), which is arranged between said lens system (9) and said device (3) for radiating light.

14. The apparatus as in claim 13, **characterized in that** the ratio of the distance
(a) between said device for radiating light and said diffuser to the distance
(b) between said diffuser and the center of the lens system is in the range of 1:1 to 1:4, particularly 1:2 to 1:3, particularly about 3:7.

15. The apparatus as in one of claims 13 to 14, **characterized in that** the ratio of the distance (a + b) between said device for radiating light and the center of said lens system to the distance (c) between the center of the lens system and the measurement plane is in the range of 5:3 to 5:8, particularly about 1:1.

16. The apparatus as in one of the preceding claims, **characterized in that** a diaphragm (12) is provided between said device (3) for radiating light and said lens system (9).

17. The apparatus as in claim 16, **characterized in that** said diaphragm (12) is disposed adjacent said device (3) for radiating light and at a distance from said lens system (9).

18. The apparatus particularly as in claim 16 or 17, **characterized in that** said diaphragm (12) comprises mirror plates (13) that extend roughly in the radiation direction.

19. The apparatus as in claim 18, **characterized in that** said mirror plates (13) of said diaphragm are arranged parallel to one another.

20. The apparatus as in one of claims 17 to 19, **characterized in that** said diffuser (11) is arranged inside said diaphragm (12).

21. The apparatus as in one of claims 17 to 20, **characterized in that** said diffuser (11) is trapped between said mirror plates (13).

22. A measuring assembly having an apparatus for emitting light as in one of the preceding claims and one or more cameras, particularly line scan cameras, wherein both said emission apparatus and said camera or cameras are oriented on one measurement plane.

23. A system for detecting faults and/or irregularities on a web of material being conveyed past along a measurement plane, **characterized in that** said system comprises a measuring assembly as in claim 22 and an analyzing unit for analyzing the data from said camera or cameras in order to locate faults and/or irregularities.

## Revendications

1. Dispositif pour l'émission de lumière, comprenant :
une traverse (5), et
des moyens agencés de façon linéaire (3) pour l'émission de lumière,
dans lesquels un moyen (3) comprend respectivement un ou plusieurs éléments électro-optiques ou diodes électroluminescentes (4) et une ou plusieurs platines (6) pour le pilotage des éléments électro-optiques ou des diodes électroluminescentes (4),
**caractérisé en ce qu'**il est prévu des éléments modulaires (2) qui portent respectivement un moyens amovibles (3) pour l'émission de lumière et sont fixés sur la traverse (5), tels que chaque élément modulaire (2) comprend un moyen de refroidissement, et tels que les éléments modulaires (2) peuvent être mis en place et être échangés chacun séparément dans le dispositif pour l'émission de lumière, de sorte qu'il est rendu possible de réparer des défauts quand un élément électro-optique ou une diode électroluminescente, ou encore la platine (6) d'un moyen (3) pour l'émission de lumière n'est plus fonctionnel(le).

2. Dispositif selon la revendication 1, **caractérisé en ce que** chaque élément modulaire (2) présente une forme qui convient à l'orientation exacte de l'élément modulaire (2) à l'intérieur du dispositif.

3. Dispositif selon la revendication 1 ou 2, **caractérisé en ce que** les éléments modulaires (2) comprennent des arêtes de butée ou des guidages pour l'orientation exacte des éléments modulaires (2) à l'intérieur du dispositif.

4. Dispositif selon la revendication 3, **caractérisé en ce que** les arêtes de butée ou les guidages des éléments modulaires (2) coopèrent avec une traverse (5) et/ou avec des arêtes de butée ou des guidages des éléments modulaires respectivement voisins (2).

5. Dispositif selon l'une des revendications précédentes, **caractérisé en ce que** chaque élément modulaire (2) comporte des nervures de refroidissement (7).

6. Dispositif en particulier selon l'une des revendications précédentes, **caractérisé en ce qu'**un dispositif pour le refroidissement d'eau est susceptible d'être raccordé à la traverse (5) destinée à porter les éléments modulaires (2), de sorte que de l'eau peut être amenée via la traverse pour le refroidissement des éléments modulaires (2).

7. Dispositif selon l'une des revendications précédentes, **caractérisé en ce que** les éléments modulaires (2) sont appliqués contre la traverse (5), de sorte que la chaleur dissipée peut être transmise par conduction thermique à la traverse (5) et ainsi être évacuée via le refroidissement à eau.

8. Dispositif en particulier selon l'une des revendications précédentes, **caractérisé en ce qu'**il est prévu une soufflante pour le refroidissement à l'air des éléments modulaires (2).

9. Dispositif selon la revendication 8, **caractérisé en ce qu'**il est prévu une unité de guidage d'air (8), afin de mener l'air sortant de la soufflante le long des éléments modulaires (2).

10. Dispositif selon la revendication 9, **caractérisé en ce que** l'unité de guidage d'air (8) mène l'air sortant de la soufflante le long de nervures de refroidissement (7) qui sont prévues sur les éléments modulaires (2).

11. Dispositif selon l'une des revendications précédentes, **caractérisé en ce qu'**il est prévu un système de lentilles (9) pour focalisation de la lumière qui sort des moyens (3) pour l'émission de lumière, vers un plan de mesure (10), afin d'obtenir un rayon lumineux de forme linéaire focalisé sur le plan de mesure (10).

12. Dispositif selon la revendication 11, **caractérisé en ce que** le système de lentilles (9) comprend une ou plusieurs lentilles en forme de barreau.

13. Dispositif selon la revendication 11 ou 12, **caractérisé en ce qu'**un diffuseur (11) est prévu à distance du système de lentilles (9), diffuseur qui est agencé entre le système de lentilles (9) et le moyen (3) pour l'émission de lumière.

14. Dispositif selon la revendication 13, **caractérisé en ce que** le rapport de la distance (a) entre les moyens pour l'émission de lumière et le diffuseur et la distance (b) entre le diffuseur et le point central du système de lentilles est dans la plage de 1:1 à 1:4, en particulier 1:2 à 1:3, en particulier approximativement 3:7.

15. Dispositif selon l'une des revendications 13 à 14, **caractérisé en ce que** le rapport de la distance (a + b) entre le moyen pour l'émission de lumière et le point central du système de lentilles par rapport à la distance (3) entre le point central du système de lentilles et le plan de mesure est dans la plage de 5:3 à 5:8, en particulier approximativement 1:1.

16. Dispositif selon l'une des revendications précédentes, **caractérisé en ce qu'**il est prévu un diaphragme (12) entre le moyen (3) pour l'émission de lumière et le système de lentilles (9).

17. Dispositif selon la revendication 16, **caractérisé en ce que** le diaphragme (12) est agencé au voisinage du moyen (3) pour l'émission de lumière et à distance du système de lentilles (9).

18. Dispositif en particulier selon la revendication 16 ou 17, **caractérisé en ce que** le diaphragme (12) comprend des tôles-miroirs (13) qui s'étendent approximativement dans la direction de rayonnement.

19. Dispositif selon la revendication 18, **caractérisé en ce que** les tôles-miroir (13) du diaphragme sont agencées parallèlement les unes aux autres.

20. Dispositif selon l'une des revendications 17 à 19, **caractérisé en ce que** le diffuseur (11) est agencé à l'intérieur du diaphragme (12).

21. Dispositif selon l'une des revendications 17 à 20, **caractérisé en ce que** le diffuseur (11) est enchâssé entre les tôles-miroirs (13).

22. Agencement de mesure avec un dispositif pour l'émission de lumière selon l'une des revendications précédentes, et une ou plusieurs caméras, en particulier des caméras à ligne, dans lequel aussi bien le dispositif d'émission que la ou les caméras sont orientés vers un plan de mesure.

23. Système pour détecter des erreurs et/ou des irrégularités sur une nappe de matériau qui est passée le long d'un plan de mesure, **caractérisé en ce que** le système comprend un agencement de mesure selon la revendication 22 et une unité d'évaluation pour l'analyse des données provenant de la ou des caméras, pour constater des erreurs et/ou des irrégularités.
